(19) Europäisches Patentamt
European Patent Office
Office européen des brevets

(11) **EP 2 621 738 B1**

(12) **EUROPEAN PATENT SPECIFICATION**

(45) Date of publication and mention
of the grant of the patent:
**20.07.2016 Bulletin 2016/29**

(21) Application number: **11829714.2**

(22) Date of filing: **07.04.2011**

(51) Int Cl.:
*B60C 1/00* *(2006.01)*          *B60C 17/00* *(2006.01)*
*C08L 9/00* *(2006.01)*          *C08L 7/00* *(2006.01)*
*C08K 3/04* *(2006.01)*

(86) International application number:
**PCT/US2011/031504**

(87) International publication number:
**WO 2012/044368 (05.04.2012 Gazette 2012/14)**

(54) **RUBBER COMPOSITION WITH LOW SURFACE AREA CARBON BLACK**

KAUTSCHUKZUSAMMENSETZUNG MIT RUSSANTEIL VON GERINGEM OBERFLÄCHENBEREICH

COMPOSITION DE CAOUTCHOUC À NOIR DE CARBONE DE FAIBLE SURFACE SPÉCIFIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2010 US 388576 P**

(43) Date of publication of application:
**07.08.2013 Bulletin 2013/32**

(73) Proprietors:
• **MICHELIN Recherche et Technique S.A.**
**1763 Granges-Paccot (CH)**
• **Compagnie Générale des Etablissements Michelin**
**63000 Clermont-Ferrand (FR)**

(72) Inventor: **BERGMAN, Brian, R.**
**Simpsonville**
**SC 29680 (US)**

(74) Representative: **Dossmann, Gérard**
**Casalonga & Partners**
**Bayerstrasse 71-73**
**80335 München (DE)**

(56) References cited:
EP-A1- 1 557 294          EP-A1- 1 752 491
WO-A1-01/16221          JP-A- 2008 031 207
US-A- 5 426 147          US-A1- 2004 092 645
US-A1- 2004 144 464          US-A1- 2005 124 760
US-A1- 2007 167 555          US-A1- 2008 128 065
US-A1- 2009 025 847          US-A1- 2009 101 263
US-A1- 2010 184 893

**Description**

BACKGROUNDS OF THE INVENTION

Field of the Invention

This invention relates generally to pneumatic tires and more specifically, to materials useful for construction of tires.

Description of the Related Art

One area of tire technology that has been developed during the last few decades is the concept of a pneumatic tire that is capable of operating in an under-inflated or non-inflated condition. In such types of pneumatic tires, which are often referred to in the industry as "run-flat" tires, it is generally desired for an under-inflated or non-inflated tire to support a vehicle during operation for a predetermined minimum number of miles and at speeds up to a predetermined maximum speed of operation. The advantages of such a tire in safety and convenience are well documented.

One type of run-flat tire that can safely run over a certain distance without losing its ability to bear the load even if the tire pressure drops due to a puncture or the like includes a side reinforcement. This type of side reinforcement is embedded in the sidewall of the tire and is often made of a rubber composition having relatively high modulus and is typically a crescent shaped support member. The side reinforcement enhances the rigidity of the side portion of the tire so that the sidewall portion can bear the load without extreme flexible deformation of the side portion of the tire when the inflation pressure drops.

There exists a need for improved materials for the manufacture of these side reinforcements in run-flat tires.

SUMMARY OF THE INVENTION

Particular embodiments of the present invention include a run-flat tire having a sidewall support member that is constructed of a material based upon a cross-linkable rubber composition. The cross-linkable rubber composition includes, per 100 parts by weight of rubber (phr), between 10 phr and 90 phr of a polyisoprene rubber and between 10 phr and 90 phr of a polybutadiene rubber. The rubber composition further includes between 60 phr and 100 phr of a thermal carbon black having a nitrogem surface area of between 5 $m^2$/g and 15 $m^2$/g and a DBP absorption of between 30 $cm^3$ /100 g and 55 $cm^3$ /100 g. The rubber composition is cured with a sulfur curing system.

Other embodiments may include a pneumatic tire having a plurality of bead area components such as the bead apex and/or the toe guard, the one or more selected bead area components being constructed from the material as described above.

The foregoing and other objects, features and advantages of the invention will be apparent from the following more detailed descriptions of particular embodiments of the invention, as illustrated in the accompanying drawing wherein like reference numbers represent like parts of the invention.

BRIEF DESCRIPTION OF THE DRAWINGS.

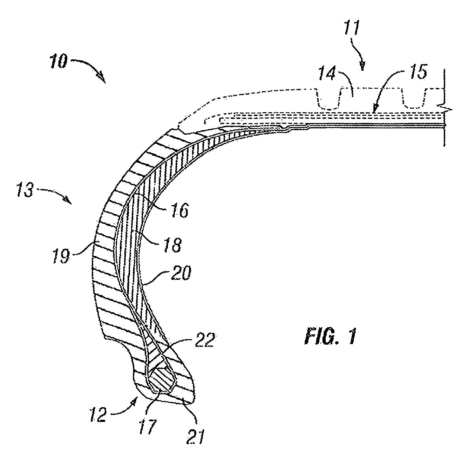

FIG. 1 is a cross-sectional view of one-half of a run-flat pneumatic tire having a sidewall support structure.

DETAILED DESCRIPTION OF PARTICULAR EMBODIMENTS

Particular embodiments of the present invention include specialized tire components of a pneumatic tire and the rubber compositions with which these specialized components are fabricated. A pneumatic tire includes a large number of specialized components that are combined to provide the performance expected of the tire. Some of these components, such as the tread and sidewalls, are known by the general public. Other components, such as the bead, bead apex and inner liner or the sidewall support structures of a run-flat tire, are less well known by the general public but are well known to one having ordinary skill in tire design and/or manufacturing.

FIG. 1 is a cross-sectional view of one-half of a run-flat pneumatic tire having a sidewall support structure. It should be noted that the tire shown in FIG. 1 is exemplary only and is not meant to limit the invention to tires having the shown architecture. The pneumatic run-flat tire 10 includes a crown section 11, a bead section 12 and a sidewall section 13. The crown section 11 includes the tread 14 that contacts the road and provides traction and the tread reinforcement package **15.** The tread reinforcement package 15 is typically comprised of steel belts. The sidewall section **13** protects the tire and the carcass plies 16 that run between the bead cores 17. The carcass ply **16** turns up around the bead core 17 forming the beard apex 22. In this exemplary run-flat tire 10, the sidewall section 13 includes a crescent-shaped support structure 18 as well as a protective complex 19. An inner liner 20 forms the interior surface of the tire and provides a barrier to limit the diffusion of the inflation gases through the tire 10. The bead section 12 generally includes the bead core 17 as well as a toe guard 21 and the bead apex 22.

For reasons that will become clear in the disclosure that follows, particular embodiments of the present invention includes those components in the bead and sidewall sections of a pneumatic tire that are thicker, e.g., the apex and toe guard found generally in the bead section of a pneumatic tire and the support structures, e.g., the crescent-shaped support structure 18 shown in FIG. 1, found in the sidewall section of a run-flat pneumatic tire.

As used herein, "phr" is 'parts per hundred rubber' and is a measure common in the art wherein components of a composition are measured relative to a major elastomer component, based upon 100 parts by weight of the elastomer(s) or rubber(s).

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon the cross-linkable rubber composition.

An embodiment of the present invention includes a sidewall support structure of a run-flat tire wherein the sidewall support structure is constructed of a material that is based upon a cross-linkable rubber composition comprising, per 100 parts by weight of rubber (phr), between 60 phr and 100 phr of a thermal carbon black having a nitrogen surface area of between 5 $m^2$/g and 15 $m^2$/g and a DBP absorption of between 30 $cm^3$ /100 g and 55 $cm^3$ /100 g. It has been found that the rubber composition having the described thermal carbon black at the indicated loadings and cured with a sulfur curing system provides a robust composition having good hysteresis properties, good thermal conductivity properties and good cohesion properties. The good cohesion properties and the good thermal conductivity are surprising results from the use of the thermal blacks in particular embodiments of the present invention.

Thermal carbon blacks differ in the way they are manufactured from the furnace carbon blacks that are typically used in rubber compositions to construct pneumatic tires. Furnace blacks are often made from a heavy aromatic feedstock that is fed into a production furnace under temperature and pressure conditions that are tightly maintained. The feedstock is pyrolyzed in the vapor phase to form the furnace carbon black products.

Thermal blacks, alternatively, are often made from natural gas that is fed into a refractory-lined reactor that has been heated in a high temperature and is devoid of air. The heat from the refractory causes the natural gas to break down into carbon black and hydrogen gas. Because the thermal blacks are formed from natural gas, they are typically characterized as being more "pure" carbon than furnace blacks that are manufactured from the heavy aromatic feedstocks.

Thermal blacks, in addition to having a more pure carbon makeup, may further be characterized as being made up of very large particules sizes with very low levels of aggregation or structures. According to ASTM D 1765, the ASTM Standard Classification System for Carbon Blacks, carbon blacks are classified according to a system that ranges, for normal curing rate blacks, from N100 series blacks through N900 series blacks, with the smaller N groups having the larger nitrogen surface area. Thermal blacks are often in the N800 series of blacks and the N900 series of blacks. Thus, for example, N990 and N991 blacks are medium thermal blacks while N800 and N880 are fine thermal blacks.

Because the thermal blacks are typically made from natural gas and not from the aromatic heavy feedstock of furnace blacks, the surface activity of the thermal blacks is less. Surface activity is descriptive of the chemical reactivity of the carbon black and its surface interaction with the rubber composition with which it is mixed. Carbon blacks made from the heavy feedstocks have greater surface area and a greater number of reactive surface groups, thereby providing a higher level of reinforcement for the rubber composition. Thermal blacks are therefore often referred to as inactive or non-reinforcing blacks since they lack the reactive surface groups and higher surface area of the reinforcing furnace blacks.

As noted above, another surprising result from the use of the thermal blacks was the increased thermal conductivity of the resulting rubber compositions. Typically it is considered that increased thermal conductivity is the result of carbon blacks having increased structure. For example, reporting on research in this area, Donnet, Jean-Baptiste (ed.) (1993), Carbon Black, Science and Technology, Marcel Dekker, Inc., p. 157, reports that a pattern of somewhat higher thermal conductivity with increasing carbon black structure was indicated, with medium thermal blacks being the lowest and N472 the highest.

A benefit of the surprisingly higher thermal conductivity of the disclosed rubber composition is that the cure time of the tire can be reduced. The thicker parts of the tire, including the sidewall supports of a run-flat tire and the bead apex of pneumatic tires, determine how long a tire must be cured in the mold. The longer the tire is being cured, it follows that fewer tires can be made with that particular mold and that energy consumption is increase as the mold is held at the cure temperature/pressure for a longer period of time. Therefore, it is an advantage to reduce the cure time of a tire.

An embodiment of the present invention includes a thermal carbon black that is a medium thermal black, a fine thermal black or combinations thereof. To ensure that the desired physical properties of the rubber composition are maintained, *i.e.,* hysteresis, thermal conductivity and cohesion, particular embodiments may be limited to having no additional fillers other than the one or more thermal blacks singly or in combination.

An embodiment includes such thermal carbon black having a nitrogen surface area as measured according to ASTM D 6556 of between 5 $m^2$/g and 15 $m^2$/g. or alternatively of between 7 $m^2$/g and 12 $m^2$/g, between 5 $m^2$/g and 20 $m^2$/g or between 8 $m^2$/g and 11 $m^2$/g. The thermal black may further be characterized as having a DBP absorption rate as measured according to ASTM D 2414 of between 30 $cm^3$/100 g and 55 $cm^3$/100 g or alternatively of between 35 $cm^3$/100 g and 50 $cm^3$/100 g.

An embodiment may further include a thermal carbon black having a mean particle diameter as measured according to ASTM D 3849, Dispersion Procedure D (CAB), of between 200 nm and 400 run or alternatively of between 225 nm and 350 nm, between 250 nm and 300 nm or between 180 nm and 450 nm.

An embodiment of the present invention includes a thermal carbon black as described above at a loading of between 50 phr and 150 phr or alternatively of between 60 phr and 125 phr, between 65 phr and 85 phr or between 60 phr and 100 phr.

An embodiment of the rubber composition includes no additional filler other than a thermal carbon black as described above. Alternatively, an embodiment of the rubber composition may include an additional filler as desired to achieve a desired physical property of the cured rubber component. However, such additional filler may be included in the rubber composition at no more than 10 percent of the total filler by weight. Alternatively, the additional filler may be no more than 8 percent, no more than 5 percent or no more than 3 percent by weight. Alternatively the additional filler may range between 0.5 wt. % and 10 wt. %, between 0.5 wt. % and 8 wt. %, between 0.5 wt. % and 5 wt. % or between 0.5 wt. % and 3 wt. %.

Such additional fillers may include, for example, furnace carbon blacks or silica. In an embodiment, the silica may be a highly dispersible precipitated silica but the invention is not so limited. Non-limiting examples of useful carbon blacks may include N550, N650, N660, N683, N762, N772 and N990. Non-limiting examples of useful silica include Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

Particular embodiments include a rubber composition having at least one highly unsaturated diene rubber. To further explain, in general, diene elastomers or rubber are those elastomers resulting at least in part (*i.e.*, a homopolymer or a copolymer) from diene monomers (monomers bearing two double carbon-carbon bonds, whether conjugated or not). Essentially unsaturated diene elastomers are understood to mean those diene elastomers that result at least in part from conjugated diene monomers, having a content of members or units of diene origin (conjugated dienes) that are greater than 15 mol.%.

Thus, for example, diene elastomers such as butyl rubbers, nitrile rubbers or copolymers of dienes and of alpha-olefins of the ethylene-propylene diene terpolymer (EPDM) type or the ethylene-vinyl acetate copolymer type do not fall within the preceding definition of essentially unsaturated diene elastomers, and may in particular be described as "essentially saturated" diene elastomers (low or very low content of units of diene origin, *i.e.*, less than 15 mol. %). An embodiment of the present invention specifically excludes the inclusion of any essentially saturated diene elastomers.

Within the category of essentially unsaturated diene elastomers are the highly unsaturated diene elastomers, which are understood to mean in particular diene elastomers having a content of units of diene origin (conjugated dienes) that is greater than 50 mol.%. Examples of highly unsaturated elastomers include polybutadienes (BR), polyisoprenes (IR), natural rubber (NR), butadiene copolymers, isoprene copolymers and mixtures of these elastomers. The polyisoprenes include, for example, synthetic cis-1,4 polyisoprene, which may be characterized as possessing cis-1,4 bonds of more than 90 mol. % or alternatively, of more than 98 mol. %. An embodiment of the present invention specifically includes only a highly unsaturated diene elastomers.

Other examples of highly unsaturated dienes include styrene-butadiene copolymers (SBR), butadiene-isoprene copolymers (BIR), isoprene-styrene copolymers (SIR) and isoprene-butadiene-styrene copolymers (SBIR) and mixtures thereof.

It should be noted that in an embodiment, any of the diene elastomers may be have been functionalized. These elastomers can be functionalized by reacting them with suitable functionalizing agents prior to or in lieu of terminating the elastomer. Exemplary functionalizing agents include, but are not limited to, metal halides, metalloid halides, alkoxysilanes, imine-containing compounds, esters, ester-carboxylate metal complexes, alkyl ester carboxylate metal complexes, aldehydes or ketones, amides, isocyanates, isothiocyanates, imines, and epoxides. These types of functionalized elastomers are known to those of ordinary skill in the art. While particular embodiments of the rubber composition may include one or more diene elastomers that have all been functionalized, other embodiments may include one or more of these functionalized elastomers mixed with one or more of the non-functionalized diene elastomers.

In an embodiment, the rubber composition includes between 10 phr and 90 phr of a polyisoprene rubber. A polyisoprene rubber may be natural rubber, a synthetic polyisoprene rubber or combinations of both. Alternatively the rubber composition may include between 50 phr and 90 phr, between 20 phr and 40 phr, between 10 phr and 50 phr or between 70 phr and 90 phr of a polyisoprene rubber.

In an embodiment, the rubber composition includes between 10 phr and 90 phr of a polybutadiene rubber.

Alternatively the rubber composition may include between 10 phr and 50 phr, between 60 phr and 80 phr, between 50 phr and 90 phr or between 10 phr and 30 phr of a polybutadiene rubber. In an embodiment, the elastomers present in the rubber composition are limited only to a polyisoprene (either natural rubber or synthetic as disclosed above), a polybutadiene or combinations thereof.

The rubber compositions disclosed herein can be cured with a sulfur curing system that typically includes sulfur and an accelerator. Suitable free sulfur includes, for example, pulverized sulfur, rubber maker's sulfur, commercial sulfur, and insoluble sulfur. The amount of free sulfur included in the rubber composition is sufficient to provide the desired physical characteristics, including modulus, and may range between 0.5 phr and 5 phr or alternatively between 1 phr and 4 phr or between 2 phr and 4.5 phr.

Use may be made of any compound capable of acting as curing accelerator in the presence of sulfur, in particular those chosen from the group consisting of 2-2'-dithio bis(benzothiazole) (MTBS), diphenyl guanidine (DPG), N-cyclohexyl-2-benzothiazole-sulphenamide (CBS), N,N-dicyclohexyl-2-benzothiazolesulphenamide (DCBS), N-tert-butyl-2-benzo-thiazole-sulphenamide (TBBS), N-tert-butyl-2-benzothiazolesulphen-imide (TBSI) and the mixtures of these compounds.

Other additives can be added to the rubber composition disclosed herein as known in the art. Such additives may include, for example, some or all of the following: antidegradants, antioxidants, antireversion agents, fatty acids; pigments, waxes, stearic acid, zinc oxide and other accelerators. Examples of antidegradants, antioxidants and antireversion agents include 6PPD, 77PD, IPPD, 1,3-Bis(citraconimidomethyl)benzene and TMQ and may be added to rubber compositions in an amount of from 0.5 phr and 5 phr. Zinc oxide may be added in an amount of between 1 phr and 6 phr, 1 phr and 5 phr, between 1 phr and 4 phr or between 1 phr and 3 phr. Tackifying resins (such as octylphenol formaldehyde resin) can also be included in the rubber composition.

An embodiment of the rubber composition includes no additional plasticizing oils or resins. However, an embodiment of the rubber composition may include one or more of plasticizing oils or resins known in the industry; for example, MES, TDAE and naphthenic oil or a polylimonene resin, a terpene resin or a C5-C9 resin. Such plasticizing components are added as a processing aid during the mixing and forming of a rubber composition and/or to help achieve a desired physical characteristic of a cured rubber composition.

In an embodiment, the one or more plasticizing oils or resins may be added in a total amount of between 0.5 phr and 30 phr or alternatively between 0.5 phr and 20 phr, between 0.5 phr and 10 phr, between 0.5 phr and 6 phr or between 0.5 phr and 4 phr.

An embodiment of the present invention includes, as disclosed above, those components of the tire that may be characterized as having a thicker construction. An embodiment also includes those tire components that are subjected to high flexural stresses. Such components may typically include the components in the bead area, especially the bead apex and the toe guard of a pneumatic tire (including a run-flat tire), and the sidewall support structure of a pneumatic run-flat tire.

Because a run-flat tire must operate over a significant distance in a non-inflated state while still providing support for a vehicle, rigidity, hysteresis and cohesion properties of the materials making up the sidewall support structure are critical. As known to those having ordinary skill in the art, run-flat tires are designed to operate for a suitable distance after loss of normal inflation pressure. Rigidity is desired to provide the needed support for the vehicle or load on the tire and low hysteresis is desired to minimize heat buildup in the tire during run-flat operation. Because of the sidewall support is subjected to high flexural stresses, the sidewall support must also have good cohesion. A sidewall support formed of the disclosed rubber composition provides the surprisingly good mix of rigidity, hysteresis and cohesion properties.

The disclosed rubber composition may be mixed using techniques that are well known in the industry. The rubber compositions may be processed in a suitable mixing device such as a BANBURY mixer under conditions of shear sufficient to allow the components to become uniformly dispersed. In a two step process, the elastomers are first masticated to increase their temperature and then the carbon black and any other components, other than the cure package, are added. The rubber composition is continued to be mixed until a temperature of between 140 °C and 180 °C is reached. The mix is then dropped and cooled.

In the second step, the mix is processed on a mill to mix the cure package into the rubber composition.

The resulting rubber composition may be extruded, compression molded, blow molded or injection molded into various shaped articles including the sidewall support structures of a run-flat tire or components in the bead area of a pneumatic tire.

The invention is further illustrated by the following examples, which are to be regarded only as illustrations and not delimitative of the invention in any way. The properties of the compositions disclosed in the examples were evaluated as described below.

Mooney Plasticity ML (1+4): Mooney Plasticity was measured in accordance with ASTM Standard D1646-04. In general, the composition in an uncured state is molded in a cylindrical enclosure and heated to 100 °C. After 1 minute of preheating, the rotor turns within the test sample at 2 rpm, and the torque used for maintaining this movement is measured after 4 minutes of rotation. The Mooney Plasticity is expressed in "Mooney units" (MU, with 1 MU = 0.83 Newton-meter).

Moduli of elongation (MPa) were measured at 10% (MA10) and 100% (MA 100) at a temperature of 23 °C based on ASTM Standard D412 on dumb bell test pieces. The measurement were taken in the second elongation; *i.e.,* after an accommodation cycle. These measurements are secant moduli in MPa, based on the original cross section of the test piece.

Hysteresis losses (HL) were measured in percent by rebound at 60 °C at the sixth impact in accordance with the following equation:

$$HL \, (\%) = 100 \, (W_0 - W_1)/W_1,$$

where $W_0$ is the energy supplied and $W_1$ is the energy restored.

The elongation property was measured as elongation at break (%) and the corresponding elongation stress (MPa), which was measured at 23 °C in accordance with ASTM Standard D412 on ASTM C test pieces.

Example 1

This example demonstrates exemplary rubber compositions as disclosed herein being reinforced with a thermal carbon black. The rubber compositions were prepared by using the components shown in Table 1. The amount of each component making up the rubber compositions F1-F6 are provided in Table 1 in parts per hundred parts by weight (phr) of the rubber. Testing plaques were cut from each of the formulations and cured at 150 °C for 60 minutes.

The witness formulation W1 includes a furnace carbon black N683. All the other formulations F1-F6 include only the thermal carbon black N990. The N990 carbon black utilized in these formulations was acquired from Cancarb Limited of Canada as THERMAX medium carbon black N990. This carbon black had a nitrogen surface area of 7-12 $m^2/g$, a DBP Absorption of 40 +/- 5 $cm^3/100$ g and a mean particle diameter of 250 nm.

Table 1 - Rubber Formulations with Physical Properties, (components in phr)

| Rubber Composition | W1 | F1 | F2 | F3 | F4 | F5 | F6 |
|---|---|---|---|---|---|---|---|
| Natural Rubber | 35 | 35 | 35 | 35 | 35 | 35 | 35 |
| Polybutadiene | 65 | 65 | 65 | 65 | 65 | 65 | 65 |
| N683 Carbon Black | 50 | | | | | | |
| N990 Carbon Black | | 50 | 60 | 70 | 70 | 80 | 80 |
| 6PPD | 3 | 3 | 3 | 3. | 3 | 3 | 3 |
| TMQ | 1 | 1 | 1 | 1 | 1 | 1 | 1 |
| Stearic Acid | 1 | 1 | 1 | 1 | 1 | 1 | 1 |
| DP900 | 2.5 | 2.5 | 2.5 | 2.5 | 2.5 | 2.5 | 2.5 |
| Zinc oxide | 4 | 4 | 4 | 4 | 4 | 4 | 4 |
| Sulfur and accelerator | 5.3 | 5.3 | 5.3 | 5.3 | 6.36 | 5.3 | 6.4 |
| | | | | | | | |
| **Physical Properties** | | | | | | | |
| Mooney ML (1 + 4) | 73 | 45 | 48 | 55 | 53 | 57 | 58 |
| MA10 @ 23 °C, MPa | 6.6 | 4.1 | 4.7 | 5.3 | 5.8 | 5.9 | 6.3 |
| MA50 @ 23 °C, MPa | 4.52 | 2.81 | 3.19 | 3.61 | 4.12 | 4.02 | 4.64 |
| Hysteresis Losses, % | 9.4 | 5.5 | 5.2 | 5.8 | 5.6 | 6.5 | 6.3 |
| Elongation at Break, % 23 °C | 190 | 203 | 194 | 207 | 233 | 226 | 255 |
| Thermal Conductiv'y, W/(mK) | 0.281 | | | | | 0.325 | |

The cured testing plaques were tested as described above to measure their physical properties. The measured physical properties are shown in Table 1. It may be noted that the thermal conductivity of the formulation containing the thermal carbon black surprisingly increased over the formulation containing the furnace black. It may further be noted the improvement in the cohesiveness of the composition as shown in the increased elongation at break of the formulations containing the thermal black over the witness containing the furnace black.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A run-flat tire comprising a sidewall support member, the sidewall support member being constructed of a material that is based upon a cross-linkable rubber composition, the cross-linkable rubber composition comprising, per 100 parts by weight of rubber (phr):

   between 10 phr and 90 phr of a polyisoprene rubber;
   between 10 phr and 90 phr of a polybutadiene rubber;
   between 60 phr and 100 phr of a thermal carbon black having a nitrogen surface area.of between 5 $m^2$/g and 15 $m^2$/g and a DBP absorption of between 30 $cm^3$ /100 g and 55 $cm^3$ /100 g; and
   a sulfur cure system.

2. The run-flat tire of claim 1, wherein the rubber composition comprises between 65 phr and 85 phr of the carbon black.

3. The run-flat tire of claim 1, wherein the polyisoprene rubber is selected from a natural rubber, a synthetic polyisoprene rubber or combinations thereof.

4. The run-flat tire of claim 1, wherein the rubber composition comprises between 20 phr and 40 phr of natural rubber and between 60 phr and 80 phr of polybutadiene rubber.

5. The run-flat tire of claim 1, wherein the rubber composition comprises between 70 phr and 90 phr of natural rubber and between 10 phr and 30 phr of polybutadiene rubber.

6. The run-flat tire of claim 1, wherein the nitrogen surface area of the thermal carbon black is between 7 $m^2$/g and 12 $m^2$/g.

7. The run-flat tire of claim 1, wherein the DBP absorption of the thermal carbon black is between 35 $cm^3$ /100 g and 50 $cm^3$ /100 g.

8. The run-flat tire of claim 1, wherein the mean particle diameter of the thermal carbon black is between 180 nm and 450 nm.

9. The run-flat tire of claim 1, wherein the mean particle diameter of the thermal carbon black is between 250 nm and 350 nm.

10. A pneumatic tire comprising a plurality of bead area components, one or more of the plurality of bead area components being selected from a bead apex or a toe guard, the one or more selected bead area components being constructed of a material that is based upon a cross-linkable rubber composition, the cross-linkable rubber composition comprising, per 100 parts by weight of rubber (phr):

between 10 phr and 90 phr of a polyisoprene rubber;
between 10 phr and 90 phr of a polybutadiene rubber;
between 60 phr and 100 phr of a thermal carbon black having a nitrogen surface area of between 5 $m^2/g$ and 15 $m2/g$ and a DBP absorption of between 30 $cm^3$/100 g and 55 $cm^3$/100 g; and
a sulfur cure system.

**Patentansprüche**

1. Runflat-Reifen mit einem Seitenwandstützelement, wobei das Seitenwandstützelement aus einem Material konstruiert ist, das auf einer vernetzbaren Kautschukzusammensetzung basiert, wobei die vernetzbare Kautschukzusammensetzung pro 100 Gewichtsteile Kautschuk (phr) Folgendes umfasst:

zwischen 10 phr und 90 phr eines Polyisoprenkautschuks;
zwischen 10 phr und 90 phr eines Polybutadienkautschuks;
zwischen 60 phr und 100 phr eines thermischen Rußes mit einer Stickstoffoberfläche zwischen 5 $m^2/g$ und 15 $m^2/g$ und einer DBP-Absorption zwischen 30 $cm^3$/100 g und 55 $cm^3$/100 g; und
ein Schwefelhärtungssystem.

2. Runflat-Reifen nach Anspruch 1, wobei die Kautschukzusammensetzung zwischen 65 phr und 85 phr von dem Ruß umfasst.

3. Runflat-Reifen nach Anspruch 1, wobei der Polyisoprenkautschuk aus einem Naturkautschuk, einem synthetischen Polyisoprenkautschuk oder Kombinationen davon ausgewählt ist.

4. Runflat-Reifen nach Anspruch 1, wobei die Kautschukzusammensetzung zwischen 20 phr und 40 phr Naturkautschuk und zwischen 60 phr und 80 phr Polybutadienkautschuk umfasst.

5. Runflat-Reifen nach Anspruch 1, wobei die Kautschukzusammensetzung zwischen 70 phr und 90 phr Naturkautschuk und zwischen 10 phr und 30 phr Polybutadienkautschuk umfasst.

6. Runflat-Reifen nach Anspruch 1, wobei die Stickstoffoberfläche des thermischen Rußes zwischen 7 $m^2/g$ und 12 $m^2/g$ beträgt.

7. Runflat-Reifen nach Anspruch 1, wobei die DBP-Absorption des thermischen Rußes zwischen 35 $cm^3$/100 g und 50 $cm^3$/100 g beträgt.

8. Runflat-Reifen nach Anspruch 1, wobei der mittlere Partikeldurchmesser des thermischen Rußes zwischen 180 nm und 450 nm beträgt.

9. Runflat-Reifen nach Anspruch 1, wobei der mittlere Partikeldurchmesser des thermischen Rußes zwischen 250 nm und 350 nm beträgt.

10. Luftreifen mit einer Vielzahl von Komponenten im Wulstbereich, wobei eine oder mehrere der Vielzahl von Komponenten im Wulstbereich aus einem Kernreiter oder einem Zehenschutz ausgewählt sind, wobei die eine oder mehreren ausgewählten Komponenten im Wulstbereich aus einem Material konstruiert sind, das auf einer vernetzbaren Kautschukzusammensetzung basiert, wobei die vernetzbare Kautschukzusammensetzung pro 100 Gewichtsteile Kautschuk (phr) Folgendes umfasst:

zwischen 10 phr und 90 phr eines Polyisoprenkautschuks;
zwischen 10 phr und 90 phr eines Polybutadienkautschuks;
zwischen 60 phr und 100 phr eines thermischen Rußes mit einer Stickstoffoberfläche zwischen 5 $m^2/g$ und 15 $m^2/g$ und einer DBP-Absorption zwischen 30 $cm^3$/100 g und 55 $cm^3$/100 g; und
ein Schwefelhärtungssystem.

**Revendications**

1. Pneumatique à flancs autoporteurs comportant un élément de support de flancs, l'élément de support de flancs étant réalisé en matière à base de composition de caoutchouc réticulable, la composition de caoutchouc réticulable comprenant, pour 100 parties en poids de caoutchouc (pcr) :

   entre 10 pcr et 90 pcr d'un caoutchouc polyisoprène ;
   entre 10 pcr et 90 pcr d'un caoutchouc polybutadiène ;
   entre 60 pcr et 100 pcr d'un noir de carbone ayant une surface spécifique d'absorption d'azote comprise entre 5 m$^2$/g et 15 m$^2$/g et un indice d'absorption de DBP compris entre 30 cm$^3$/100 g et 55 cm$^3$/100 g ; et
   un système de vulcanisation au soufre.

2. Pneumatique à flancs autoporteurs selon la revendication 1, dans lequel la composition de caoutchouc comprend entre 65 pcr et 85 pcr du noir de carbone.

3. Pneumatique à flancs autoporteurs selon la revendication 1, dans lequel le caoutchouc polyisoprène est choisi parmi un caoutchouc naturel, un caoutchouc synthétique polyisoprène et des combinaisons de ceux-ci.

4. Pneumatique à flancs autoporteurs selon la revendication 1, dans lequel la composition de caoutchouc comprend entre 20 pcr et 40 pcr de caoutchouc naturel et entre 60 pcr et 80 pcr de caoutchouc polybutadiène.

5. Pneumatique à flancs autoporteurs selon la revendication 1, dans lequel la composition de caoutchouc comprend entre 70 pcr et 90 pcr de caoutchouc naturel et entre 10 pcr et 30 pcr de caoutchouc polybutadiène.

6. Pneumatique à flancs autoporteurs selon la revendication 1, dans lequel la surface spécifique d'absorption d'azote du noir de carbone est comprise entre 7 m$^2$/g et 12 m$^2$/g.

7. Pneumatique à flancs autoporteurs selon la revendication 1, dans lequel dans lequel indice d'absorption de DBP du noir de carbone est compris entre 35 cm$^3$/100 g et 50 cm$^3$/100 g.

8. Pneumatique à flancs autoporteurs selon la revendication 1, dans lequel le diamètre moyen des particules du noir de carbone est compris entre 180 nm et 450 nm.

9. Pneumatique à flancs autoporteurs selon la revendication 1, dans lequel le diamètre moyen des particules du noir de carbone est compris entre 250 nm et 350 nm.

10. Bandage pneumatique comportant d'une pluralité d'éléments de zone de talon, un ou plusieurs des différents éléments de zone de talon étant choisi(s) parmi un bord de talon ou une protection de pointe de talon, le/les élément(s) de zone de talon choisi(s) étant réalisé(s) en matière à base de composition de caoutchouc réticulable, la composition de caoutchouc réticulable comprenant, pour 100 parties en poids de caoutchouc (pcr) :

    entre 10 pcr et 90 pcr d'un caoutchouc polyisoprène ;
    entre 10 pcr et 90 pcr d'un caoutchouc polybutadiène ;
    entre 60 pcr et 100 pcr d'un noir de carbone ayant une surface spécifique d'absorption d'azote comprise entre 5 m$^2$/g et 15 m$^2$/g et un indice d'absorption de DBP compris entre 30 cm$^3$/100 g et 55 cm$^3$/100 g ; et
    un système de vulcanisation au soufre.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Carbon Black, Science and Technology. Marcel Dekker, Inc, 1993, 157